# EUROPÄISCHE PATENTANMELDUNG

(11) **EP 3 597 473 A1**
(43) Veröffentlichungstag der Anmeldung: **22.01.2020**
(21) Anmeldenummer: 18184627.0
(22) Anmeldetag: 20.07.2018
(51) Int. Cl.: B60L 53/16, H01R 33/94

(54) **LADEVORRICHTUNG**

(71) Anmelder: MAGNA STEYR Fahrzeugtechnik AG & Co KG, 8041 Graz (AT)
(72) Erfinder: LEITNER, Martin, 8020 Graz (AT); STOCKER, Werner, 8053 Graz (AT)
(74) Vertreter: Zangger, Bernd

(57) **Zusammenfassung**

Eine Ladevorrichtung, umfassend eine Ladestation (1) und zumindest ein Fahrzeug (2) mit einer Hochvoltbatterie, wobei die Ladestation (1) einen ersten elektrischen Kontakt (3) aufweist und das Fahrzeug (2) einen zweiten elektrischen Kontakt (4) aufweist, wobei nach Verbinden des ersten elektrischen Kontakts (3) mit dem zweiten elektrischen Kontakt (4) elektrischer Strom zum Aufladen der Hochvoltbatterie von der Ladestation (1) zum Fahrzeug (2) übertragen werden kann, wobei die Ladestation (1) einen Führungsdorn (5) mit einem konischen Ende (6) aufweist, wobei der erste elektrische Kontakt (3) mit dem Führungsdorn (5) fest verbunden ist, wobei das Fahrzeug (2) einen Führungstrichter (7) mit einem Aufnahmebereich (8) zur Aufnahme des konischen Endes (6) des Führungsdorns (5) aufweist, wobei das konische Ende (6) des Führungsdorns (5) vom ersten elektrischen Kontakt (3) räumlich getrennt ist und der Aufnahmebereich (8) des Führungstrichters (7) vom zweiten elektrischen Kontakt (4) räumlich getrennt ist.

## Beschreibung

### Gebiet der Erfindung

Die vorliegende Erfindung betrifft eine Ladevorrichtung, umfassend eine Ladestation und zumindest ein Fahrzeug mit einer Hochvoltbatterie.

### Stand der Technik

Fahrzeuge die eine Hochvoltbatterie verwenden sind vor allem als Elektro- oder Hybridfahrzeuge bereits gut bekannt und setzen die Hochleistungsbatterie üblicherweise als Energiespeicher für den Antrieb des Fahrzeugs ein.

Zum Laden derartiger Hochvoltbatterien sind stationäre Ladestationen bekannt, wobei vom Fahrer eines Fahrzeugs eine Steckverbindung eines Ladekabels zwischen Fahrzeug und Ladestation hergestellt werden kann und über das Ladekabel die Hochvoltbatterie geladen werden kann.

In jüngerer Zeit wird auch versucht den Ladevorgang für den Fahrer des Fahrzeugs zu vereinfachen, in dem beispielsweise die Batterie eines Fahrzeugs induktiv, also ohne Kabelverbindung, aufgeladen werden kann. Jedoch sind dabei nur geringe Ladeleistungen erreichbar und der Wirkungsgrad der Aufladung ist gering.

Es wird auch versucht den Vorgang des Ansteckens des Ladekabels zu automatisieren, in dem Roboter und ähnlich Automaten eingesetzt werden, um eine Steckverbindung zum elektrischen Laden der Batterie herzustellen. Jedoch sind derartige Roboter komplex und teuer.

Aus der WO2013030265 A2 ist eine Ladevorrichtung bekannt, umfassend ein Plug-in-Fahrzeug mit einer Ladeelektrik, eine Ladestation und ein Ladekabel zum Laden eines Energiespeichers des Fahrzeugs über eine kabelgebundene Ladeverbindung, wobei die Ladeelektrik eine Buchse und das Ladekabel einen Stecker umfasst, wobei die Buchse einen Einführtrichter oder mehrere Einführtrichter aufweist, wobei der Stecker einen Einführstift oder mehrere Einführstifte aufweist, wobei jeder Einführstift einem bestimmten Einführtrichter zugeordnet ist, wobei der Stecker durch einen von der Ladestation umfassten Führungsmechanismus bewegbar sind. Dabei wird ein elektrischer Stecker zum Aufladen eines Energiespeichers zur einfacheren Positionierung in einen Einführtrichter eingeführt. Dabei kann der elektrische Stecker jedoch beschädigt werden.

### Zusammenfassung der Erfindung

Es ist eine Aufgabe der Erfindung, eine Ladevorrichtung in dieser Hinsicht zu verbessern und insbesondere eine Ladevorrichtung anzugeben, die eine kostengünstige automatisierte Verbindung zwischen Ladestation einerseits und Fahrzeug bzw. Hochvoltbatterie andererseits ermöglicht und dabei langlebig ist.

Die Lösung der Aufgabe erfolgt durch eine Ladevorrichtung, umfassend eine Ladestation und zumindest ein Fahrzeug mit einer Hochvoltbatterie, wobei die Ladestation einen ersten elektrischen Kontakt aufweist und das Fahrzeug einen zweiten elektrischen Kontakt aufweist, wobei nach Verbinden des ersten elektrischen Kontakts mit dem zweiten elektrischen Kontakt elektrischer Strom zum Aufladen der Hochvoltbatterie von der Ladestation zum Fahrzeug übertragen werden kann,
wobei die Ladestation einen Führungsdorn mit einem konischen Ende aufweist, wobei der erste elektrische Kontakt mit dem Führungsdorn fest verbunden ist, wobei das Fahrzeug einen Führungstrichter mit einem Aufnahmebereich zur Aufnahme des konischen Endes des Führungsdorns aufweist, wobei das konische Ende des Führungsdorns vom ersten elektrischen Kontakt räumlich getrennt ist und der Aufnahmebereich des Führungstrichters vom zweiten elektrischen Kontakt räumlich getrennt ist, so dass bei einem Kontakt zwischen konischem Ende des Führungsdorns einerseits und Führungstrichter außerhalb des Aufnahmebereichs andererseits, im Zuge einer Annäherung der elektrischen Kontakte, der erste elektrische Kontakt nicht in Berührung mit dem Führungstrichter steht.

Erfindungsgemäß weist eine Ladestation einen Führungsdorn auf, der eine axiale Erstreckung aufweist, so dass er in axialer Richtung an ein zu ladendes Fahrzeug und insbesondere in die Nähe eines an dem Fahrzeug ausgebildeten Führungstrichters gebracht werden kann. Der Führungsdorn und dessen konisches, also im wesentlichen kegelförmiges Ende, dienen zur Feinpositionierung zwischen der Ladestation und dem Fahrzeug, so dass eine genaue elektrische Kontaktierung möglich wird.

Zum eigentlichen Aufladen der Hochvoltbatterie wird ein erster elektrischer Kontakt der Ladestation mit einem zweiten elektrischen Kontakt des Fahrzeuges verbunden. Dabei ist der erste elektrische Kontakt der Ladestation mit dem Führungsdorn fest verbunden, so dass beide Bauteile gemeinsam ruhen oder beispielsweise gemeinsam bewegbar sind, insbesondere axial und/oder radial bewegbar, so dass die Positionierung des Führungsdorns gleichzeitig auch den ersten elektrischen Kontakt positioniert.

"Fest verbunden" heißt erfindungsgemäß, dass die beiden Bauteile so miteinander verbunden sind, dass sie nur zusammen bewegt werden könnten oder gemeinsam ruhen. Beispielsweise können die Bauteile dazu auch einstückig ausgebildet sein.

Der erste elektrische Kontakt ist dabei räumlich getrennt vom Ende des Führungsdorns, so dass die notwenige mechanische Kontaktierung des Führungsdorns am Führungstrichter des Fahrzeuges nicht mit einer mechanischen Kontaktierung der elektrischen Kontakte bzw. Anschlüsse verbunden ist.

Hierzu ist gleichzeitig auch der Aufnahmebereich des Führungstrichters, in welchem das konische Ende des Führungsdorns zu liegen kommt, vom zweiten elektrischen Kontakt räumlich getrennt, so dass bei einer gewünschten Endposition des Führungsdorns der Aufnahmebereich und das konische Ende an einer Stelle zu liegen kommen, und der erste und zweite elektrische Kontakt an einer davon verschiedenen, räumlich getrennten Stelle zu liegen kommen und miteinander in Kontakt treten.

Dabei kommt bei einem Kontakt, im Sinne einer Berührung, zwischen konischem Ende des Führungsdorns und Führungstrichter zunächst der erste elektrische Kontakt nicht in Berührung mit dem Führungstrichter und auch nicht mit dem zweiten elektrischen Kontakt. Erst wenn das konische Ende in den Aufnahmebereich des Führungstrichters aufgenommen ist, ist der erste elektrische Kontakt auch in Berührung mit dem zweiten elektrischen Kontakt.

Die bei der Führung des Führungsdorns im Führungstrichter auftretenden Kräfte, insbesondere Reibkräfte, wirken daher nicht auf den ersten und zweiten elektrischen Kontakt und beschädigen diese Kontakte bzw. Anschlüsse nicht.

Weiterbildungen der Erfindung sind in den abhängigen Ansprüchen, der Beschreibung sowie den beigefügten Zeichnungen angegeben.

Vorzugsweise ist das konische Ende des Führungsdorns vom ersten elektrischen Kontakt durch einen radialen Abstand zur Achse des Führungsdorns räumlich getrennt. Der elektrische Kontakt ist daher in üblicher axialer Erstreckungsrichtung des Führungsdorns seitlich beabstandet.

Alternativ oder zusätzlich ist bevorzugt das konische Ende des Führungsdorns vom ersten elektrischen Kontakt durch einen axialen Abstand, bezogen auf die Achse des Führungsdorns, räumlich getrennt. Elektrischer Kontakt und Führungsdorn liegen dann in axialer Richtung hintereinander. Insbesondere kann das Ende des Führungsdorns in axialer Richtung vor dem elektrischen Kontakt liegen, so dass das Ende des Führungsdorns zumindest die Öffnung des Führungstrichters schon erreicht, wenn die elektrischen Kontakte noch voneinander entfernt sind.

Bevorzugt ist der erste elektrische Kontakt stirnseitig am vorderen Ende eines mit dem Führungsdorn verbundenen Trägers angeordnet ist. Der Träger kann insbesondere im Wesentlichen ein Zylinder oder eine Stange sein. Dieser Träger, insbesondere Zylinder, liegt dann seitlich benachbart zu dem üblicherweise ebenfalls zylinderförmigen Führungsdorn und kann mehrteilig mit diesem verbunden oder auch einstückig mit diesem ausgeführt sein, so dass Träger und Führungsdorn fest verbunden und daher nur gemeinsam bewegt werden könnten. Eine Positionierung des Führungsdorns positioniert dann gleichzeitig auch den Träger sowie dessen ersten elektrischen Kontakt.

Der erste elektrische Kontakt kann an der Mantelfläche eines mit dem Führungsdorn fest verbundenen zylinderförmigen Trägers ausgebildet sein, insbesondere an der Mantelfläche des Führungsdorns selbst. Der erste elektrische Kontakt liegt dann bevorzugt in Richtung der axialen Erstreckung des Führungsdorns hinter dem konischen Ende des Führungsdorns.

Der erste elektrische Kontakt ist vorzugsweise normal zur Erstreckung des Führungsdorns und/oder zur Erstreckung des Trägers flexibel, elastisch oder federelastisch beweglich ausgebildet, so dass kleine Abweichungen zwischen den Positionen der elektrischen Kontakte einfach ausgeglichen werden können, beispielsweise bis zu 4 cm oder bis zu 2 cm.

Das konische Ende des Führungsdorns kann auch einen Magneten aufweisen, so dass dieses leichter in den Aufnahmebereich des Führungstrichters finden kann.

Besonders bevorzugt weist die Ladestation eine Positionsmarkierung auf. Das Fahrzeug ist bevorzugt dazu eingerichtet, autonom zur Positionsmarkierung zu steuern und/oder auf Grund der Positionsmarkierung den Führungsdorn zu finden und/oder zur Vollendung des Andockvorganges den Führungsdorn korrekt anzusteuern. Dazu kann das Fahrzeug zumindest einen Sensor, beispielsweise eine Kamera, umfassen, der zur Erkennung der Positionsmarkierung geeignet ist. Somit kann eine grobe Positionierung des Fahrzeugs bzw. zwischen Führungsdorn und Führungstrichter sowie zwischen den elektrischen Kontakten bereits autonom durch das Fahrzeug, ohne Steuerung durch einen Lenker, erfolgen. Die weitere Feinpositionierung der Kontakte erfolgt dann, bevorzugt ebenfalls automatisch, durch Führungsdorn und Führungstrichter, wobei hierbei das Fahrzeug vorzugsweise autonom gesteuert, also ohne Fahrerinteraktion, fährt.

Der Andockvorgang kann so erfolgen, dass der Abstand des Fahrzeuges zur Ladestation dem Fahrzeug durch Sensoren oder durch auf andere Weise erhaltene Informationen bekannt ist, so dass sich das Fahrzeug in den Bereich der Ladestation bewegen kann. Auch durch geeignete Positionsmarkierungen, beispielsweise eine senkrechte Linie an der Ladestation an der Wand im Bereich des Trägers oder direkt auf dem Träger, kann die maximal erlaubte seitliche Abweichung eingehalten werden. Die maximal erlaubte seitliche Abweichung muss erreicht werden, solange der Abstand zwischen Ladestation und Fahrzeug noch groß genug ist, dass Führungsdorn und Führungskegel noch nicht in Eingriff sind. - Das Fahrzeug muss in seiner Vorwärtsbewegung, insbesondere autonom, so gesteuert werden, dass der Führungsdorn zumindest in den Führungstrichter trifft, wobei diese Ausrichtung zueinander nicht zentrisch sein muss. Ein eventueller Versatz bzw. eine eventuelle seitliche Abweichung wird vom beweglich/nachgiebig aufgehängten Träger ausgeglichen. Auch in Höhenrichtung wird hierdurch ein Versatz zwischen Fahrzeug und Ladestation ausgeglichen.

Erst dann fährt das Fahrzeug unter Berücksichtigung des Abstandes zur Ladestation weiter vorwärts bis der Andockvorgang erfolgreich abgeschlossen wurde. Auch hierbei wird ein etwaiger Versatz zwischen Ladestation und Fahrzeug bzw. Führungsdorn ausgeglichen.

Der Abschluss des Andockvorgangs kann dadurch erkannt werden, dass durch magnetische, optische oder elektrische Sensoren festgestellt wird, dass der Führungsdorn vollständig im Führungstrichter aufgenommen wurde.

Alternativ oder zusätzlich kann die Endposition über die dann hergestellten elektrischen Kontakte zwischen Fahrzeug und Ladestation festgestellt werden.

Die Ladestation kann dem Fahrzeug signalisieren, wenn die einwirkende Kraft auf den Führungsdorn zu groß ist und so die Beendigung des Andockvorganges auslösen bzw. dem vorwärts bewegenden Fahrzeug ein Stop-Signal übermitteln.

Damit unterschiedliche Fahrzeuge andocken können, die auf Grund Ihres Bauhöhenunterschiedes bzw. Beladungszustandes kein durch bloße Vorwärtsbewegung des Fahrzeuges bewirktes Zusammenfinden von Führungsdorn und Führungstrichter ermöglichen, kann eine vertikale Verstellung (z-Richtung) des Andockmechanismus der Ladestation, insbesondere des Trägers an der Ladestation, vorgesehen werden.

Eine erfindungsgemäße Andockvorrichtung kann auch vorliegen, wenn, in umgekehrter Weise zu der zuvor beschriebenen Ausführung, der Führungstrichter an der Ladestation ausgebildet ist und der Führungsdorn am Fahrzeug ausgebildet ist.

Daher ist erfindungsgemäß auch eine Ladevorrichtung, umfassend eine Ladestation und zumindest ein Fahrzeug mit einer Hochvoltbatterie, wobei das Fahrzeug einen ersten elektrischen Kontakt aufweist und die Ladestation einen zweiten elektrischen Kontakt aufweist, wobei nach Verbinden des ersten elektrischen Kontakts mit dem zweiten elektrischen Kontakt elektrischer Strom zum Aufladen der Hochvoltbatterie von der Ladestation zum Fahrzeug übertragen werden kann, wobei das Fahrzeug einen Führungsdorn mit einem konischen Ende aufweist, wobei der erste elektrische Kontakt mit dem Führungsdorn fest verbunden ist, wobei die Ladestation einen Führungstrichter mit einem Aufnahmebereich zur Aufnahme des konischen Endes des Führungsdorns aufweist, wobei das konische Ende des Führungsdorns vom ersten elektrischen Kontakt räumlich getrennt ist und der Aufnahmebereich des Führungstrichters vom zweiten elektrischen Kontakt räumlich getrennt ist, so dass bei einem Kontakt zwischen konischem Ende des Führungsdorns und Führungstrichter außerhalb des Aufnahmebereichs, während einer Annäherung der elektrischen Kontakte, der erste elektrische Kontakt nicht in Berührung mit dem Führungstrichter steht.

Auch eine solche umgekehrte Ausbildung kann alle zuvor für das Fahrzeug beschriebenen Merkmale der Andockvorrichtung an der Andockvorrichtung der Ladestation und alle für die Andockvorrichtung der Ladestation beschriebenen Merkmale an der Andockvorrichtung des Fahrzeuges aufweisen.

### Kurzbeschreibung der Zeichnungen

Die Erfindung wird im Folgenden beispielhaft unter Bezugnahme auf die Zeichnungen beschrieben.
- Fig. 1: ist eine schematische seitliche Ansicht einer erfindungsgemäßen Ladevorrichtung in einer ersten Ausführungsform.
- Fig. 2: ist eine schematische seitliche Ansicht einer erfindungsgemäßen Ladevorrichtung in einer zweiten Ausführungsform.
- Fig. 3 a) b) c) d): ist eine schematische seitliche Ansicht von Schritten zur Herstellung einer elektrischen Verbindung mit einer erfindungsgemäßen Ladevorrichtung gemäß Fig. 1.
- Fig. 4 a) b) c): ist eine schematische seitliche Ansicht von Schritten zur Herstellung einer elektrischen Verbindung mit einer erfindungsgemäßen Ladevorrichtung gemäß Fig. 2.
- Fig. 5: ist eine schematische Ansicht von oben während der Herstellung einer elektrischen Verbindung mit einer erfindungsgemäßen Ladevorrichtung.
- Fig. 6: ist eine schematische Ansicht von oben gemäß Fig. 5, die die Bestimmung von Abständen in einer ersten Variante darstellt.
- Fig. 7: ist eine schematische Ansicht von oben gemäß Fig. 5, die die Bestimmung von Abständen in einer zweiten Variante darstellt.
- Fig. 8: ist eine schematische Ansicht von oben gemäß Fig. 5, die die Bestimmung von Abständen in einer dritten Variante darstellt.
- Fig. 9: ist eine schematische Ansicht von oben gemäß Fig. 5, die die Bestimmung von Abständen in einer vierten Variante darstellt.

### Detaillierte Beschreibung der Erfindung

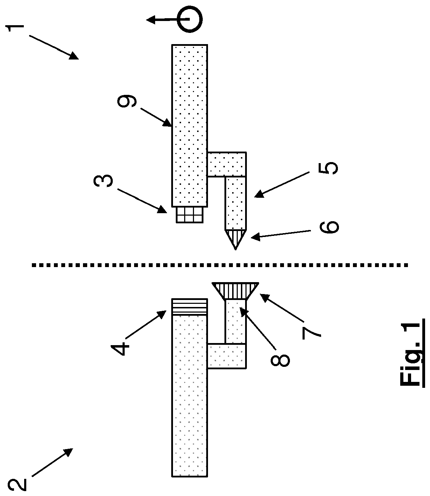

In Fig. 1 ist eine erfindungsgemäße Ladevorrichtung in einer ersten Ausführungsform dargestellt.

Die Ladevorrichtung umfasst eine stationäre Ladestation 1 und ein autonomes, zum Beispiel elektrisch betriebenes Fahrzeug 2 mit einer Hochvoltbatterie, wobei die Ladestation 1 einen ersten elektrischen Kontakt 3 stirnseitig am vorderen Ende eines zylinderförmigen Trägers 9 aufweist.

Das Fahrzeug 2 weist einen zweiten elektrischen Kontakt 4 auf, der ebenfalls an einem zylindrischen Träger wie dargestellt, oder auch in anderer Weise am Fahrzeug 2 montiert sein kann.

Nach Verbinden des ersten elektrischen Kontakts 3 mit dem zweiten elektrischen Kontakt 4, also nach der Herstellung eines elektrischen Kontakts, kann elektrischer Strom zum Aufladen der Hochvoltbatterie von der Ladestation 1 zum Fahrzeug 2 übertragen werden um dessen Batterie zu laden.

Die stationäre Ladestation 1 weist einen starren, insbesondere aber beweglich/nachgiebig aufgehängten, Führungsdorn 5 bzw. Träger 9 mit einem konischen Ende 6 auf.

Bevorzugt ist der Führungsdorn 5 starr mit dem Träger 9 verbunden und nur der Träger 9 passiv beweglich, nachgiebig aufgehängt. Möglich ist auch, dass zum Schutz der elektrischen Kontakte eine gewisse Elastizität, Nachgiebigkeit bzw. Beweglichkeit der elektrischen Kontakte 3 gegenüber dem Träger 9 ausgebildet ist.

Alternativ sind der erste elektrische Kontakt 3 sowie der Träger 9 mit dem Führungsdorn 5 gemeinsam axial ausfahrbar, vorzugsweise in senkrechter Richtung verstellbar.

Führungsdorn 5 und Träger 9 können als ein einziges Bauteil ausgebildet sein.

Das Fahrzeug 2 weist einen Führungstrichter 7 mit einem Aufnahmebereich 8, zur Aufnahme des konischen Endes 6 des Führungsdorns 5 in dessen zum Laden geeigneten Endposition, auf. Durch den Führungstrichter 7 ist der Führungsdorn 5 und insbesondere dessen konisches Ende 6 während dessen Annäherung an den Aufnahmebereich 8 in seiner Position, insbesondere in seiner radialen Abweichung von der Achse des Führungstrichters 7, führbar bzw. korrigierbar, so dass das konische Ende 6 sicher in den Aufnahmebereich 8 gelangen kann.

Das konische Ende 6 des Führungsdorns 5 ist vom ersten elektrischen Kontakt 3 durch einen radialen Abstand räumlich getrennt und der Aufnahmebereich 8 des Führungstrichters 7 ist ebenfalls durch einen gleich großen radialen Abstand vom zweiten elektrischen Kontakt 4 räumlich getrennt.

Das konische Ende 6 sowie der Führungstrichter 7 sind axial näher zueinander angeordnet als die beiden elektrischen Kontakte 3,4, so dass sich konisches Ende 6 sowie Führungstrichter 7 schon vor den elektrischen Kontakten 3, 4 begegnen bzw. einander berühren können.

Der axiale Abstand zwischen konischem Ende 6 sowie Aufnahmebereich 8 des Führungstrichters 7 entspricht dem axialen Abstand zwischen dem ersten und dem zweiten elektrischen Kontakt 3, 4.

Bei einem Kontakt zwischen konischem Ende 6 des Führungsdorns 5 und Führungstrichter 7 außerhalb des Aufnahmebereichs 8, nämlich während einer Annäherung der elektrischen Kontakte 3, 4 sowie zwischen Führungsdorn 5 und Führungstrichter 7, steht der erste elektrische Kontakt 3 nicht in Berührung mit dem Führungstrichter 7 und auch noch nicht mit dem zweiten elektrischen Kontakt 4.

Das konische Ende 6 des Führungsdorns 5 ist somit vom ersten elektrischen Kontakt 3 durch einen radialen Abstand zur Achse des Führungsdorns 5 räumlich getrennt.

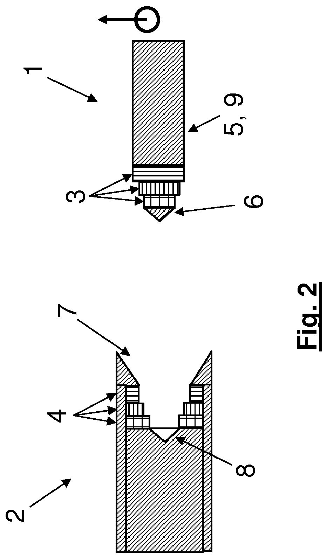

Der erste elektrische Kontakt 3 ist auf dem Träger 9 radial nachgiebig gelagert, wie in Fig. 1 und 2 rechts neben dem Träger 9 symbolisch als Kreis mit Pfeil dargestellt, so dass ein radialer Ausgleich einer Abweichung zum zweiten elektrischen Kontakt 4 möglich ist. Der erste elektrische Kontakt 3 ist somit bevorzugt in y und z Fahrzeugrichtung bewegbar bzw. auslenkbar. Der Träger 9 kann durch eine elastische Kraft bzw. Federkraft wieder in eine zentrierte Position zurückgeführt werden.

Fig. 2 zeigt eine erfindungsgemäße Ladevorrichtung in einer zweiten Ausführungsform.

Diese Ausführungsform unterscheidet sich von der Ausführung nach Fig. 1 vor allem dadurch, dass das konische Ende 6 des Führungsdorns 5 vom ersten elektrischen Kontakt 3 durch einen axialen Abstand, bezogen auf die Achse des Führungsdorns 5, räumlich getrennt ist.

Der Führungsdorn 5, dessen vorderes Ende durch das konische Ende 6 gebildet wird, ist hier gleichzeitig der Träger 9 für den ersten elektrischen Kontakt 3.

Wie in dieser Figur zu sehen, kann ein elektrischer Kontakt durch mehrere, beispielsweise durch zwei, elektrische Pole gebildet werden.

Der erste elektrische Kontakt 3 bzw. dessen elektrische Pole sind an der Mantelfläche des, mit dem Führungsdorn 5 ausfahrbaren, also verbundenen, zylinderförmigen Trägers 9 ausgebildet, und somit an der Mantelfläche des Führungsdorns 5.

Auf der Seite der Ladestation 2 sind ebenfalls mehrere Pole als zweiter elektrischer Kontakt 4 ausgebildet und liegen so tief im Führungstrichter 7, dass sie, bei Annäherung bzw. Kontakt zwischen konischem Ende 6 und Führungstrichter 7, nicht oder kaum berührt werden.

Der erste sowie der zweite elektrische Kontakt 3,4 sind als axial hintereinanderliegende Pole mit unterschiedlichen Radius ausgebildet. Dabei ist der erste elektrische Kontakt 3 bzw. sind dessen Pole scheibenförmig ausgebildet und der zweite elektrische Kontakt 4 bzw. dessen Pole sind als Gegenstücke dazu ringförmig ausgebildet, so dass die jeweiligen Polringe auf die Polscheiben des ersten elektrischen Kontaktes passen.

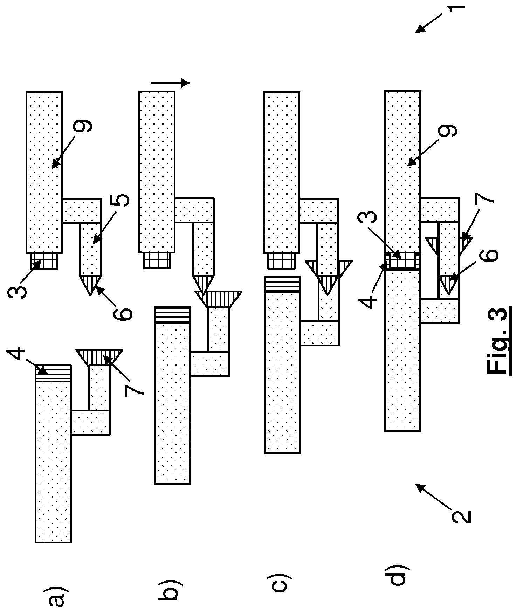

Fig. 3 zeigt in ihren Abbildungen a) b) c) und d) vier Verfahrensschritte bei der Annäherung zwischen Fahrzeug und Ladestation, zur Herstellung einer elektrischen Verbindung mit einer erfindungsgemäßen Ladevorrichtung gemäß Fig. 1, also einen "Andockvorgang".

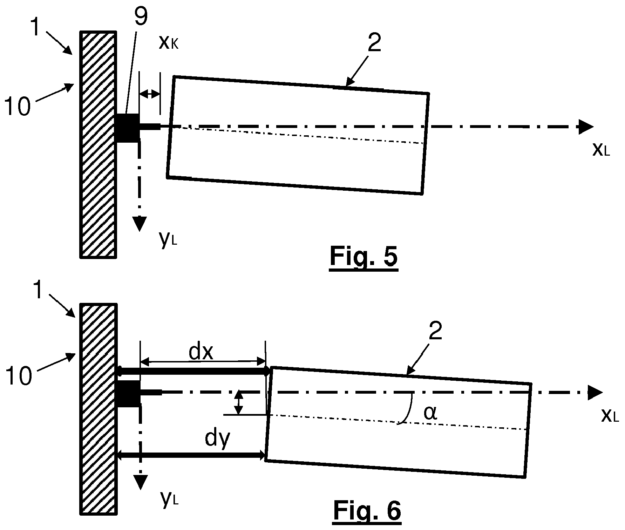

Dabei bewegt sich das Fahrzeug 2 in Abbildung a) axial näher zur Ladestation 1 und somit der erste elektrische Kontakt 3 näher zum zweiten elektrischen Kontakt 4 und das konische Ende 6 näher zum Führungstrichter 7. Dabei besteht radial, bzw. in y/z Fahrzeugrichtung, ein Versatz zwischen elektrischen Kontakten 3, 4. Die Breite bzw. konische Form des Führungstrichters 7 bestimmt hier in Verbindung mit dem Führungsdorn die maximal erlaubte bzw. mögliche seitliche Abweichung zwischen Fahrzeug und Ladestation. Zum Schutz der elektrischen Kontakte bzw. zum zuverlässigen Funktionieren des Andockvorganges sollte hierbei auch beim Nachgeben des Trägers der Ladestation ein maximal zulässiger Winkelversatz zwischen Ladestation und Fahrzeug bzw. Führungsdorn 5 und Führungstrichter 7 nicht überschritten werden. Für das Einhalten dieser Parameter ist bevorzugt das autonom steuernde Fahrzeug während seiner Vorwärtsbewegung beim Andockvorgang verantwortlich. Näher beschrieben ist die Einhaltung von maximalen Abständen bei einem Andockvorgang in den Fig. 5 bis 7.

In Abbildung b) ist das konische Ende 6 der Ladestation 1 im Führungstrichter 7 aufgenommen und kann von diesem bei weiterer Annäherung zentriert werden.

Daraufhin sind, wie in Abbildung c) dargestellt, Führungsdorn 5 und Führungstrichter 7 zueinander zentriert, wobei die elektrischen Kontakte 3, 4 noch frei liegen, also an keinem Bauteil anliegen oder reiben.

Bei weiterer Annäherung des Fahrzeuges 2 kann somit, wie in Abbildung d) dargestellt, das konische Ende 6 in den Aufnahmebereich 8, der zentral im Führungstrichter 7 liegt, aufgenommen werden und die beiden elektrischen Kontakte 3 und 4 miteinander verbunden werden. Es ist somit eine mechanische und eine elektrische Verbindung zwischen Fahrzeug 2 und Ladestation 1 hergestellt.

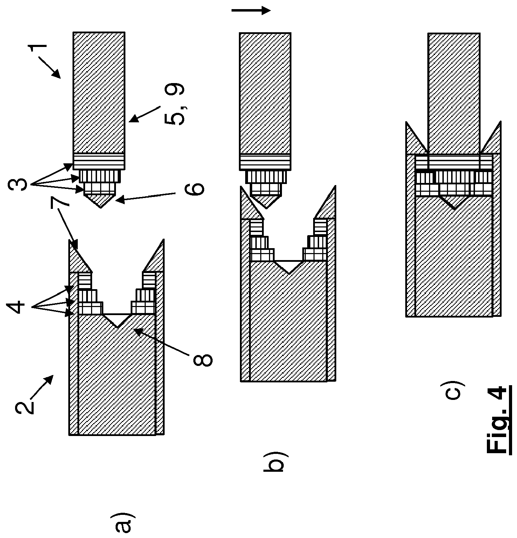

Fig. 4 zeigt in den Verfahrensschritten a) b) und c) eine analoge Herstellung einer elektrischen Verbindung mit einer erfindungsgemäßen Ladevorrichtung gemäß Fig. 2.

In Fig. 4 a) besteht noch ein Abstand von beispielsweisen einigen cm zwischen den Achsen des Führungstrichters 7 und des Trägers 9 und somit auch zwischen den Achsen der ersten und zweiten elektrischen Kontakte 3 und 4.

Bei axialer Annäherung des Fahrzeugs 2 - Fig. 4 b) - erfolgt ein Höhenausgleich bzw. Toleranzausgleich des Trägers 9 und somit des auf dem Träger 9 befestigten ersten elektrischen Kontakts 3, wie durch den Pfeil nach unten in Abbildung b) dargestellt.

Bei weiterer Annäherung des Fahrzeuges 2 und somit des Führungstrichters 7, werden Führungstrichter 7 und Führungsdorn 5 bzw. Träger 9 auf eine gemeinsame Achse gebracht und weiter angenähert, so dass der erste elektrische Kontakt 3 in Verbindung mit dem zweiten elektrischen Kontakt 4 gelangt und das Aufladen der Batterie des Fahrzeuges 2 erfolgen kann.

In den Fig. 5 bis 9 ist ein möglicher Andockvorgang in einer erfindungsgemäßen Ladevorrichtung, nämlich zwischen einer Ladestation 1 und einem Fahrzeug 2, näher dargestellt.

Die Dockvorrichtung am Fahrzeug 2 - umfassend einen zweiten elektrischen Kontakt 4 sowie einen Führungstrichter 7 - ist dabei in Längsrichtung am Fahrzeug angeordnet, also in der Front oder am Heck des Fahrzeuges 2.

Fig. 5 und Fig. 6 zeigt die prinzipielle Anordnung von Ladestation und Fahrzeug zueinander während einem Andockvorgang.

Die Ladestation erlaubt ein Andocken mit einer maximalen Abweichung in y-Richtung Y_{L} von dy(L) und einem maximalen Abweichwinkel a(L) zur x-Achse der Ladestation X_{L}, die in einer bestimmten Entfernung zwischen Ladestation 1 und Fahrzeug 2 zueinander, nämlich X_{K}, eingehalten sein müssen. dy(L) und a(L) sind Ladestation-spezifisch, hängen also von der gewählten Ladestation 1 ab. Die x-Achse X_{L} und die y-Achse Y_{L} werden von der Ladestation 1 definiert. Im Wesentlichen entspricht die x-Achse X_{L} der Richtung der Achse des Trägers 9 und/oder des Führungsdorns 5 der Ladestation 1 und steht die y-Achse normal darauf.

Das Fahrzeug 2 seinerseits erlaubt ein Andocken mit einer maximalen Abweichung dy(F) und einem maximalem Abweichwinkel a(F), wobei diese Werte Fahrzeug-spezfisch sind.

Die jeweils kleineren Werte von dy(L), dy(F) und α(L), α(F) ergeben die tatsächlichen maximal gültigen Abweichungen (dy(e) und α(e)) mit denen ein Andocken zwischen der bestimmten Ladestation 1 und dem bestimmten Fahrzeug 2 erfolgreich durchgeführt werden kann.

Der Andockvorgang kann mittels eines Sensors oder einer Kombination mehrerer der folgenden Sensoren und Sensordaten erfolgen:

### Sensordaten:

Abstand in x-Richtung zur Ladestation vorne/hinten, Abstand in y-Richtung zur Ladestation,
Geschwindigkeit,
Kommunikation mit der Ladestation (zum Beispiel: Dockvorgang erfolgreich, Daten zum Ladevorgang, Laden beendet).

Mögliche Sensoren für die x-Richtung:
optische (Kamera , Lidar, ...), akustische (Ultraschall), magnetische/elektromagnetische (Radar,Induktionsschleife) Sensoren.

Mögliche Sensoren für die y-Richtung:
optische (Kamera , Lidar, ...), akustische (Ultraschall), magnetische/elektromagnetische (Radar,...) Sensoren in Verbindung mit optischen oder baulichen Markierungen.

### Sensoren für die Geschwindigkeit:

Drehzahlsensoren (Radsensoren, Getriebe, Motor, ...), optische (Kamera , Lidar, ...), akustische (Ultraschall), magnetische/elektromagnetische (Radar,...) Sensoren.

Die Kommunikation mit der Ladestation kann beispielsweise erfolgen mittels Funksystem: z.B. GSM, Blutooth, WiFi, Zigbee, etc; Infrarot; oder Hardwired über Ladekontakt.

### Der Andockvorgang kann folgendermaßen erfolgen:

Das Fahrzeug 2 bekommt von einer Infrastruktur eine Ladestation 1 zugewiesen oder das Fahrzeug 2 oder sein Fahrer erkennt eine freie Ladebucht bzw. Ladestation 1 und startet eine Kommunikation mit der Ladestation 1, ob und unter welchen Bedingungen ein Andocken und Laden möglich ist.

Das Fahrzeug 2 fährt (manuell, autonom oder teilautonom gesteuert) in die Nähe der Ladestation 1.

Die Andockparameter dy(e) und a(e) werden zusammen mit der Ladestation 1 ermittelt.

Optional können an die Ladestation 1 Fahrzeugdaten übermittelt werden, die eine Einstellung von Parametern an der Ladestation 1ermöglichen, zum Beispiel die Position (y,z) der Andockvorrichtung des Fahrzeuges 2.

Das Fahrzeug 2 kann danach die Ladestation 1 anfahren, und positioniert sich mit laufenden Messungen, so dass dy(e) und a(e) eingehalten werden. Spätestens bei Punkt X_{K} müssen die Andockparameter erreicht werden, ansonsten ist ein Abbruch des Andockvoganges erforderlich.

Ab Punkt X_{K} muss das Fahrzeug langsam weiterfahren bis a) ein definierter Fahrweg zurückgelegt ist oder b) die Ladestation ein erfolgreiches Andocken meldet oder c) durch andere Sensoren oder Herstellung eines elektrischen Kontaktes das Fahrzeug ein erfolgreiches Andocken feststellen kann.

Ist nach erwartetem Fahrweg kein Andocken erfolgt, oder die Ladestation 1 gibt keine Meldung oder eine Fehlermeldung aus, ist das Andocken fehlgeschlagen und abzubrechen.

Nach erfolgreichem Andocken kann optional eine Prüfung des elektrischen Kontakts erfolgen, bevor der Ladevorgang gestartet wird.

Fig. 6 bis 9 zeigen mögliche Verfahren zur Positionserkennung mit oben erwähnten Sensoren die einzeln oder kombiniert eingesetzt werden können.

Fig. 6 zeigt den Abstand dx in x-Richtung X_{L} bis zur gewünschten Endposition des Fahrzeuges 2 und den Abweichwinkel α zur Achse des Trägers 9 und/oder des Führungsdorns 5 der Ladestation 1, also zu X_{L}, die aus Messungen des Abstands des Fahrzeuges 2 zu einer Wand 10 berechnet werden können, wobei die Wand 10 parallel zur Front oder zum Heck des Fahrzeuges 2 in der erwünschten Ladeposition des Fahrzeugs 2 ausgerichtet ist. Die Wand 10 ist an der Ladestation 1 ausgebildet. Die Wand 10 steht normal auf den Träger 9 und/oder den Führungsdorn 5 der Ladestation 1, also normal auf X_{L}.

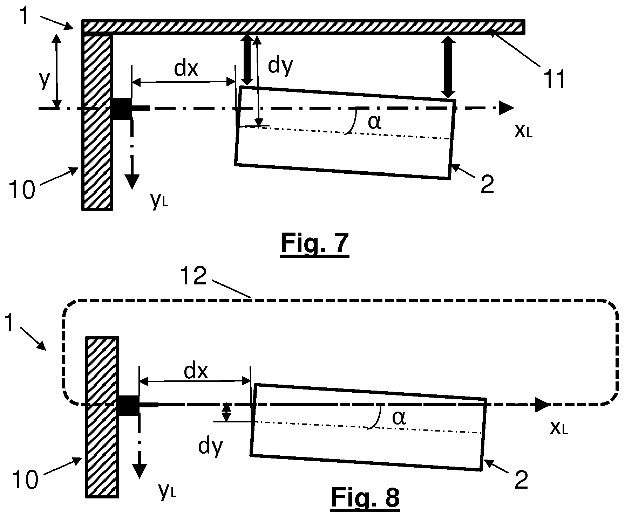

Fig. 7 zeigt den Abstand dy in y-Richtung Y_{L} (seitlich) und den selben Abweichwinkel a, die aus Messungen des Abstands des Fahrzeuges zu einer Seitenwand 11 der Ladestation 1 berechnet werden können.

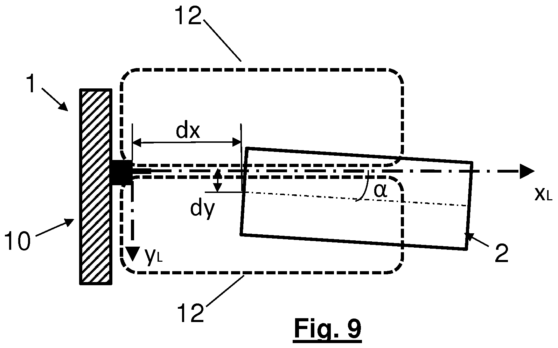

Wie Fig. 8 und Fig. 9 darstellen, kann anstelle einer Wand 10 oder einer Seitenwand 11 auch eine Induktionsschleife 12 oder mehrere Induktionsschleifen 12 zur Bestimmung der Abstände des Fahrzeuges 1 in x-Richtung, in y-Richtung oder bezüglich des Abweichwinkels, mittels Sensoren verwendet werden.

### Bezugszeichenliste

- 1: Ladestation
- 2: Fahrzeug
- 3: erster elektrischer Kontakt
- 4: zweiter elektrischer Kontakt
- 5: Führungsdorn
- 6: konisches Ende
- 7: Führungstrichter
- 8: Aufnahmebereich
- 9: Träger
- 10: Wand
- 11: Seitenwand
- 12: Induktionsschleife

- X_{K}: Kontrollabstand
- X_{L}: x-Richtung der Ladestation
- Y_{L}: y-Richtung der Ladestation
- dx: Abstand Fahrzeug in x-Richtung
- dy: Abstand Fahrzeug in y-Richtung
- α: Abweichungswinkel

## Patentansprüche

1. Ladevorrichtung, umfassend eine Ladestation (1) und zumindest ein Fahrzeug (2) mit einer Hochvoltbatterie, wobei die Ladestation (1) einen ersten elektrischen Kontakt (3) aufweist und das Fahrzeug (2) einen zweiten elektrischen Kontakt (4) aufweist, wobei nach Verbinden des ersten elektrischen Kontakts (3) mit dem zweiten elektrischen Kontakt (4) elektrischer Strom zum Aufladen der Hochvoltbatterie von der Ladestation (1) zum Fahrzeug (2) übertragen werden kann,
**dadurch gekennzeichnet, dass** die Ladestation (1) einen Führungsdorn (5) mit einem konischen Ende (6) aufweist, wobei der erste elektrische Kontakt (3) mit dem Führungsdorn (5) fest verbunden ist, wobei das Fahrzeug (2) einen Führungstrichter (7) mit einem Aufnahmebereich (8) zur Aufnahme des konischen Endes (6) des Führungsdorns (5) aufweist, wobei das konische Ende (6) des Führungsdorns (5) vom ersten elektrischen Kontakt (3) räumlich getrennt ist und der Aufnahmebereich (8) des Führungstrichters (7) vom zweiten elektrischen Kontakt (4) räumlich getrennt ist, so dass bei einem Kontakt zwischen konischem Ende (6) des Führungsdorns (5) und Führungstrichter (7) außerhalb des Aufnahmebereichs (8), während einer Annäherung der elektrischen Kontakte (3, 4), der erste elektrische Kontakt (3) nicht in Berührung mit dem Führungstrichter (7) steht.

2. Ladevorrichtung nach Anspruch 1,
**dadurch gekennzeichnet, dass** das konische Ende (6) des Führungsdorns (5) vom ersten elektrischen Kontakt (3) durch einen radialen Abstand zur Achse des Führungsdorns (5) räumlich getrennt ist.

3. Ladevorrichtung nach zumindest einem der vorhergehenden Ansprüche,
**dadurch gekennzeichnet, dass** das konische Ende (6) des Führungsdorns (5) vom ersten elektrischen Kontakt (3) durch einen axialen Abstand bezogen auf die Achse des Führungsdorns (5) räumlich getrennt ist.

4. Ladevorrichtung nach zumindest einem der vorhergehenden Ansprüche,
**dadurch gekennzeichnet, dass** der erste elektrische Kontakt (3) stirnseitig am vorderen Ende eines mit dem Führungsdorn (5) fest verbundenen Trägers (9) angeordnet ist.

5. Ladevorrichtung nach zumindest einem der vorhergehenden Ansprüche,
**dadurch gekennzeichnet, dass** der erste elektrische Kontakt (3) an der Mantelfläche eines mit dem Führungsdorn (5) fest verbundenen zylinderförmigen Trägers (9) ausgebildet ist, insbesondere an der Mantelfläche des Führungsdorns selbst.

6. Ladevorrichtung nach zumindest einem der vorhergehenden Ansprüche,
**dadurch gekennzeichnet, dass** der erste elektrische Kontakt (3) normal zur Erstreckung des Führungsdorns (5) und/oder des Trägers (9) flexibel, elastisch oder federelastisch beweglich ausgebildet ist.

7. Ladevorrichtung nach zumindest einem der vorhergehenden Ansprüche,
**dadurch gekennzeichnet, dass** die Ladestation (1) eine Positionsmarkierung aufweist und das Fahrzeug (2) dazu eingerichtet ist, autonom zur Positionsmarkierung zu steuern und/oder auf Grund der Positionsmarkierung den Führungsdorn (5) zu finden und/oder zur Vollendung des Andockvorganges den Führungsdorn (5) korrekt anzusteuern.

8. Ladevorrichtung, umfassend eine Ladestation (1) und zumindest ein Fahrzeug (2) mit einer Hochvoltbatterie, wobei das Fahrzeug (2) einen ersten elektrischen Kontakt (3) aufweist und die Ladestation (1) einen zweiten elektrischen Kontakt (4) aufweist, wobei nach Verbinden des ersten elektrischen Kontakts (3) mit dem zweiten elektrischen Kontakt (4) elektrischer Strom zum Aufladen der Hochvoltbatterie von der Ladestation (1) zum Fahrzeug (2) übertragen werden kann,
**dadurch gekennzeichnet, dass** das Fahrzeug (2) einen Führungsdorn (5) mit einem konischen Ende (6) aufweist, wobei der erste elektrische Kontakt (3) mit dem Führungsdorn (5) fest verbunden ist, wobei die Ladestation (1) einen Führungstrichter (7) mit einem Aufnahmebereich (8) zur Aufnahme des konischen Endes (6) des Führungsdorns (5) aufweist, wobei das konische Ende (6) des Führungsdorns (5) vom ersten elektrischen Kontakt (3) räumlich getrennt ist und der Aufnahmebereich (8) des Führungstrichters (7) vom zweiten elektrischen Kontakt (4) räumlich getrennt ist, so dass bei einem Kontakt zwischen konischem Ende (6) des Führungsdorns (5) und Führungstrichter (7) außerhalb des Aufnahmebereichs (8), während einer Annäherung der elektrischen Kontakte (3, 4), der erste elektrische Kontakt (3) nicht in Berührung mit dem Führungstrichter (7) steht.
